# EUROPEAN PATENT APPLICATION

(11) **EP 4 776 489 A1**
(43) Date of publication of application: **15.07.2026**
(21) Application number: 25151534.2
(22) Date of filing: 13.01.2025
(51) Int. Cl.: H02K 9/19, H02K 7/116, H02K 1/32, H02K 5/20, H02K 7/00, B60K 1/00, F16H 57/04

(54) **ELECTRICAL DRIVE AXLE**

(71) Applicant: ZF Friedrichshafen AG, 88046 Friedrichshafen (DE)
(72) Inventor: Dong, Ye, Shanghai, 201615 (CN)
(74) Representative: WBH Wachenhausen Patentanwälte PartG mbB

(57) **Abstract**

The invention relates to an electrical drive axle (2) for a vehicle (1). The electrical drive axle (2) comprises an electrical motor (10) with a stator (13) having a radial direction (91). The electrical drive axle (2) also comprises a cooling fluid supply and an ejecting device (29; 31). The ejecting device (29; 31) is configured to eject cooling fluid in the radial direction (91) of the stator (13) onto the stator (13) for cooling the stator (13). The invention also relates to a vehicle (1) with the electrical drive axle (2).

## Description

### Technical field

The present invention relates to an electrical drive axle and a vehicle having such an electrical drive axle.

### Prior art

Drive axles for vehicles are known. In some cases, the drive axle is provided with an electrical motor for converting electrical power into mechanical power for driving the vehicle. In such electrical motors, significant thermal losses may arise in a rotor and/or a stator of the electrical motor. The available cooling capacity for absorbing the thermal losses may limit the achievable power density under certain conditions.

### Summary of the invention

The present disclosure relates in a first aspect to an electrical drive axle for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The electrical drive axle may be configured to convert electrical power into mechanical power for driving the vehicle. The electrical drive axle may be provided as an axle of the vehicle, for example a front axle or a rear axle of the vehicle. The electrical drive axle may comprise a gearing with one or more output shafts. The gearing may be configured for converting an input value into an output value. For example, the gearing may be able to convert an input rotational speed into a lower or higher output rotational speed and an input torque into a higher or lower output torque. The gearing may be configured to distribute power applied to the input shaft between an output shaft and a further output shaft. The gearing may comprise one or more gear sets configured to convert torques and rotational speeds from one value to another. The gear set or sets may be formed as spur gears, helical gears, planetary gears, bevel gears or other suitable gears. At least one output shaft of the electrical drive axle may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The drive element may be, for example, a wheel for contacting the ground or a drive wheel or sprocket for tracks. The vehicle may comprise a shiftable transmission disposed in a power flow between the electrical motor and the drive element.

The electrical drive axle comprises an electrical motor having a radial direction. The electrical motor comprises a stator. The electrical motor may comprise a rotor further to the stator. The electrical motor may be configured to convert an input electrical power into an output power applied to the rotor. The electrical motor may receive electrical energy from an energy source, for example a battery or a fuel cell, and convert it to rotational mechanical energy, for example to a driving torque for the rotor. At least one of the rotor and the stator may be provided for inducing a magnetic field. At least one of the rotor and the stator may be provided with permanent magnets. In one example, the rotor comprises permanent magnets and the stator is configured for inducing a magnetic field. The stator may comprise windings, for example conducting windings, for generating a magnetic field in the stator.

The stator may be permanently non-rotatably connected to a stationary member. The stationary member may be configured for providing support and for receiving forces and torques. The stationary member may comprise a housing. The housing may be provided as one or several casings for enclosing stationary and/or rotational components of the gearing and/or the electrical motor. The stationary member may comprise several housing portions. Each housing portion may be configured to accommodate and support different components. For example, the stationary member may comprise one or more housing portions for enclosing and rotatably supporting the gearing. For example, the stationary member may comprise one or more housing portions for enclosing and rotatably supporting the electrical motor. The exemplary housing portions may be mounted detachably or permanently to each other or may be formed integrally with each other. The stationary member may be arranged in direct or indirect contact with the stator. In case of a direct contact, the stationary member may contact the stator. In case of an indirect contact, intermediate elements may be interposed between the stationary member and the stator. The intermediate elements may comprise a separate insulating member. The insulating member may be provided for electrically insulating the stator and the stationary member.

The electrical drive axle comprises a cooling fluid supply. The cooling fluid supply may be configured to supply a cooling fluid. The cooling fluid may be provided as a fluid suitable for absorbing heat with a high thermal capacity. The cooling fluid may optionally serve as a lubricant for parts of the electrical drive axle. For example, the cooling fluid may comprise a lubricating oil. In another example, the cooling fluid may be configured for cooling only, for example as water or a water glycol mixture. The cooling fluid may be also used for cooling and/or lubricating the gearing. The cooling fluid supply may comprise at least one of a tank, a pump, a sump, a filter and piping. The cooling fluid supply may comprise a mechanically or electrically driven pump for providing the cooling fluid with a predetermined pressure. In one example, the pump may be provided in fluid communication with a sump described further in the following, for example by being arranged in the sump. The cooling fluid supply may be connected to a cooling and/or lubricating circuit of the vehicle or may be provided as a separate circuit.

The electrical drive axle comprises an ejecting device configured to eject cooling fluid in the radial direction onto the stator for cooling the stator. The ejecting device may be formed as a nozzle or a hole, for example. The ejecting device may be configured to eject the cooling fluid onto a circumferential surface of the stator. For example, the ejecting device may be arranged on an inner circumferential surface of a housing portion and an opening of the ejecting device may face the stator. In case the stator comprises windings, the ejecting device may be configured to eject the cooling fluid onto the windings, for example radially inwards towards the windings. The ejecting device may be configured to eject the cooling fluid so as to generate a radial or substantially radial movement of the ejected cooling fluid from the ejecting device towards the stator. The ejecting device may be configured to eject the cooling fluid by dripping. In such a case, the cooling fluid may exit the ejecting device in an unpressurized or low pressure state, namely at a pressure equal or substantially equal to an ambient pressure level outside the ejecting device in the direction of the stator. The exiting cooling fluid may form drops that fall onto the stator under the influence of gravity. Such drops may comprise free surfaces in all directions, resulting in a large ratio of surface area to volume, thereby improving heat dissipation of the stator. The electrical drive axle may comprise a means for supplying cooling fluid to the ejecting device in the unpressurized state. For example, the electrical drive axle may comprise a supply tank, into which cooling fluid may be fed such that the cooling fluid may form a free surface at the ambient pressure level. The supply tank may be in fluid communication with the ejecting device so as to supply it with cooling fluid at the ambient pressure level. Alternatively or additionally, the ejecting device may be configured to eject the cooling fluid in a pressurized state, for example as a jet or as a spray. In case the cooling fluid is ejected as spray, it may form a number of droplets dispersed in the fluid surrounding the stator, for example air. Thereby, a large surface area of the cooling fluid is generated for contacting and cooling the stator. In case the cooling fluid is ejected as a jet, it may form a continuous or nearly continuous stream of cooling fluid. Thereby, a large distance can be traversed by the ejected cooling fluid.

With the present embodiment, the stator can be cooled with high efficiency. Compared to a water cooling solution, where the heat of the stator needs to pass through an electrically insulating member, the heat dissipation capacity is greatly improved by means of the cooling fluid being ejected onto the stator so as to come in direct contact with the stator for cooling the stator. Accordingly, it is possible to increase the power density of the electrical motor and the electrical drive axle. Furthermore, in case the cooling fluid is also used for lubrication, it may be advantageous to increase its temperature to an operating temperature more quickly. By ejecting cooling fluid onto the stator, residual heat from the stator can be transferred to the cooling fluid so as to more quickly increase its temperature to the operating temperature.

In an embodiment, the ejecting device is configured as a dripping device for dripping the cooling fluid onto the stator. By providing a large surface area of cooling fluid drops formed by the dripping as described above, the cooling efficiency of the stator can be improved. Furthermore, energy expenditure for pressurizing the cooling fluid can be minimized, thereby further improving overall efficiency of the electrical drive axle.

In an embodiment, the stator comprises windings and the ejecting device is configured to eject cooling fluid onto the windings. The windings of the stator offer a large surface area for the cooling fluid to come into contact with. Furthermore, by cooling the windings directly, the heat generated in the windings can be dissipated more efficiently. Thereby, the cooling efficiency of the stator can be improved.

In an embodiment, the ejecting device is provided on one axial side of the stator and a further ejecting device is provided on the other axial side of the stator for ejecting cooling fluid onto the stator on both axial sides. The further ejecting device may be configured the same as the ejecting device described above or differently therefrom. By providing at least two ejection devices so as to eject cooling fluid onto circumferential surfaces on both axial sides of the stator, the overall cooling efficiency of the stator can be improved. On each axial side of the stator, a plurality of ejecting devices may be provided, thereby further increasing cooling efficiency.

In an embodiment, the electrical drive axle comprises a supply tank formed in a housing portion accommodating the stator for supplying the ejecting device with cooling fluid from the cooling fluid supply. The housing portion may be configured to enclose and/or non-rotatably support the stator. The supply tank may be provided as described in the foregoing. The supply tank may be formed along a wall of the housing portion, for example between an inner surface and an outer surface of the wall. Alternatively or additionally, the supply tank may be formed at least partly outside the wall. The supply tank may be in fluid communication with the cooling fluid supply, for example via a supply channel formed in the housing portion. The housing portion in which the supply tank and/or channel is formed may be part of the above-described stationary member. Alternatively or additionally, the supply tank and/or channel may extend through other elements, for example shafts like the output shaft and the rotor shaft. A plurality of supply channels may be provided in the same housing portion and/or in different housing portions. The plurality of supply channels may be at least partly in fluid communication with each other. In one example, the ejecting device and the further ejecting device may be supplied with cooling fluid from the same supply tank. Alternatively or additionally, the ejecting device may be supplied with cooling fluid via a supply tank or channel formed in the housing portion accommodating the stator, and the further ejecting device may be supplied with cooling fluid via a further supply tank or channel formed in a further housing portion that does not accommodate the stator.

In an embodiment, the electrical drive axle is configured to supply both the ejecting device and the further ejecting device with cooling fluid from the supply tank. By using the same supply tank for both ejecting devices, the structure of the electrical drive axle for cooling the stator is simplified.

In an embodiment, the electrical drive axle comprises a plurality of ejecting devices arranged in a circumferential direction around an axial direction of the electrical motor. The plurality of ejecting devices may be arranged at an axial height overlapping the stator. Thereby, cooling efficiency can be increased. The supply tank may be formed at least partly along the circumferential direction in the housing portion accommodating the stator. The supply tank may be in fluid communication with the ejecting devices for supplying the ejecting devices with cooling fluid. Thereby, the plurality of ejecting devices can be supplied with cooling fluid with a simple structure.

In an embodiment, the electrical drive axle comprises a common supply channel formed in a stationary member. The common supply channel may be formed in a housing portion of the above-described stationary member. In one example, the common supply channel may be formed in a housing portion accommodating the gearing. The common supply channel may be in fluid communication with the cooling fluid supply. The electrical drive axle may be configured to enable at least a part of the cooling fluid flowing through the common supply channel to flow to the ejecting device for ejection. The electrical drive axle may also be configured to enable at least a part of the cooling fluid flowing through the common supply channel to flow to an element of the gearing for lubricating the element of the gearing. By means of the common supply channel, the same cooling fluid supply and at least parts of channels for guiding the cooling fluid can be used both for cooling the stator and for lubricating elements of the gearing. Thereby, a simple structure is provided. Additional details concerning the lubricated element of the gearing are provided further in the following.

In an embodiment, the electrical drive axle comprises a sump, a drain channel for draining cooling fluid into the sump and a heat exchanger arranged in the sump for exchanging heat between the cooling fluid in the sump and a coolant. In an alternative embodiment, the heat exchanger may be arranged outside the sump. The sump may be provided at a lower end of the electrical drive axle with respect to the ground direction. The drain channel may be formed in the stationary member, for example. A single drain channel or a plurality of drain channels may be provided. The drained cooling fluid may comprise at least parts of the ejected cooling fluid and/or other cooling fluid present in the electrical drive axle, for example additional cooling fluid that has been provided to elements of the electrical motor and/or the gearing. The coolant may flow through the heat exchanger so as to absorb heat from the cooling fluid. Thereby, the coolant may also absorb heat from the stator so as to cool the stator. The coolant may be a water-based coolant, for example water or a water-glycol mixture. The coolant may be provided as part of a cooling circuit of the vehicle or a separate cooling circuit. The cooling circuit may include at least one of a pump, a tank, a filter, coolant piping and a further heat exchanger or cooler. By transferring heat to the coolant, the overall cooling capacity of the stator and thus the efficiency of the electrical drive axle can be further improved.

In an embodiment, the electrical motor comprises a rotor mechanically connected to a rotor shaft. The rotor may be connected non-rotatably to the rotor shaft. Alternatively, the mechanical connection between the rotor and the rotor shaft may be configured to allow some slip. The rotor shaft may extend at least partly through the electrical motor. In the present embodiment, the electrical drive axle comprises a gearing. The gearing may comprise an input shaft and an output shaft. The output shaft may be arranged coaxially to the rotor shaft. The rotor shaft may be formed as a hollow shaft. The output shaft may extend at least partly through the rotor shaft. In one example, the output shaft extends along and beyond the whole axial length of the rotor shaft. The input shaft may be operatively connected to the rotor shaft. In one example, the input shaft and the rotor shaft may be integrally formed. In another example, the input shaft may be permanently or selectively non-rotatably connected to the rotor shaft. In another example, a transmission may be interposed between the input shaft and the rotor shaft. Thereby, the input shaft may be configured for directly or indirectly receiving input, for example a rotational speed and a torque, from the rotor shaft.

The output shaft may be configured to receive cooling fluid from the cooling fluid supply. The output shaft may be configured to receive cooling fluid from the stationary member, for example from a supply channel or a common supply channel as described above. Alternatively or additionally, the output shaft may be configured to receive cooling fluid from a rotating element, for example from a channel formed in another shaft. The output shaft may be configured to receive cooling fluid by comprising a receiving channel, into which the cooling fluid can be introduced. The element supplying the cooling fluid, for example the stationary member or the other shaft, may supply the cooling fluid directly, for example via a channel or a rotary feedthrough, or indirectly, for example by ejecting the fluid to be received by the output shaft.

The output shaft may be further configured to enable at least a part of the received cooling fluid to flow from the output shaft to the rotor shaft for cooling the rotor. The output shaft may be formed to provide a fluid communication path between the above-described receiving channel and at least one surface of the rotor shaft. For this purpose, the output shaft may comprise fluid connections such as channels and cavities. In one example, the receiving channel may be formed as an axially extending channel. A connecting channel may be provided radially so as to connect the receiving channel with an outer circumferential surface of the output shaft. An inner circumferential surface of the rotor shaft may be arranged to face the outer circumferential surface of the output shaft so as to form a cavity between the rotor shaft and the output shaft. In any case, the output shaft may be configured to guide at least a part of the received cooling fluid to contact the rotor shaft for the purpose of cooling the rotor. The cooling of the rotor may be carried out directly, for example by guiding the cooling fluid through the rotor, or indirectly, for example by cooling the rotor shaft and by having the rotor shaft in thermal contact with the rotor.

In an embodiment, the electrical drive axle comprises a first rotor cooling channel extending through the rotor shaft and being in fluid communication with a second rotor cooling channel extending through the rotor. For example, the first rotor cooling channel may extend radially or substantially radially through the rotor shaft and a part of the rotor. For example, the second rotor cooling channel may extend axially or substantially axially through the rotor. For example, the second rotor cooling channel may open to an axial end face of the rotor. The cooling fluid flowing through the second rotor cooling channel may flow out of the rotor so as to be drained. By means of the rotor cooling channels, the rotor can be cooled directly with a high efficiency, thereby further improving overall efficiency of the electrical motor and the electrical drive axle. Alternatively or additionally to the rotor cooling channels, the electrical drive axle may comprise a heat exchange path for guiding at least a part of the cooling fluid received by the output shaft along a surface of the rotor shaft so as to indirectly cool the rotor shaft. The surface may be an inner circumferential surface of the rotor shaft as described above or any other suitable surface of the rotor shaft. The rotor shaft may be in thermal contact with the rotor. The heat exchange path may provide a flow path for the cooling fluid along the rotor shaft so as to enable additional heat exchange between the cooling fluid and the rotor shaft for cooling the rotor.

In an embodiment, the electrical drive axle is configured to enable at least a part of the received cooling fluid to flow through at least one of the output shaft and the rotor shaft for lubricating an element of the gearing. For example, a fluid communication path may be provided between the receiving channel of the output shaft and the lubricated element of the gearing. The fluid communication path may include at least some of a channel extending through the output shaft, an annular cavity formed radially between the output shaft and the rotor shaft and a channel extending through the rotor shaft. The lubricated element of the gearing may be any element of the gearing, for example a gear, a bearing, a shaft or any other element requiring lubrication. In one example, the gearing may comprise a planetary gearset and a planetary carrier comprising a planetary pin and a planetary gear may be the lubricated element of the gearing. In other examples, the lubricated element of the gearing may be a bearing supporting at least one of the rotor shaft and the output shaft.

For example, the electrical drive axle may comprise a bearing for rotatably supporting the rotor shaft with respect to an element of the gearing. The element of the gearing may be an element for transferring torque. The element of the gearing may be an element mechanically connected to the output shaft, for example for transferring torque, axial forces and/or radial forces. In one example, the element of the gearing may be a planetary carrier axially and non-rotatably connected to the output shaft. The bearing may be configured to allow relative rotation between the element of the gearing and the rotor shaft while transferring an axial force and/or a radial force between the element of the gearing and the rotor shaft. The bearing may be formed as, for example, a radial bearing, an axial bearing or a combined bearing. A radial bearing may be configured for transferring radial loads while allowing axial displacement. An axial bearing may be configured for transferring axial loads while allowing radial displacement. A combined bearing may be configured for transferring both radial and axial loads. The bearing may be formed as a single bearing element or a group of several bearing elements. Examples for the bearing include angular contact ball bearings, conical bearings, cylindrical roller bearings, tapered roller bearings, axial roller bearings and plane bearings. In one example, the bearing may be formed as an axial needle bearing. In another example, the bearing may be formed as deep groove ball bearing or a cylindrical roller bearing. The bearing may be provided directly between the element of the gearing and the rotor shaft or with other elements interposed therebetween.

In the present example, the output shaft may be configured to enable at least a part of the received cooling fluid to flow through the output shaft for lubricating the bearing. For example, the output shaft may comprise a fluid communication path between the above-described receiving channel and the bearing. For example, the output shaft may comprise a lubrication channel extending from the receiving channel to an outer surface of the output shaft in the vicinity of the bearing. In one example, the bearing and the lubrication channel for lubricating the bearing may overlap along the axial direction. By means of the present embodiment, lubrication of the bearing may be achieved in addition to the cooling effect of the rotor, thereby simplifying the structure of the electrical drive axle and improving its efficiency.

Alternatively or additionally, the electrical drive axle may comprise a first rotor shaft bearing for rotatably supporting the rotor shaft with respect to a stationary member. The stationary member may be provided as the stationary member described above or as a separate stationary member. In one example, the first rotor shaft bearing may be configured as a combined axial and radial bearing for transferring axial and radial forces from the output shaft to the stationary member. The bearing described above and the first rotor shaft bearing may be configured to be the same or different from each other. The rotor shaft may be configured to enable at least a part of the received cooling fluid to flow through the rotor shaft for lubricating the first rotor shaft bearing. For example, the rotor shaft may be configured to provide a fluid communication path from the receiving channel to the first rotor shaft bearing. In this regard, reference is made to the above descriptions concerning the bearing supporting the rotor shaft with respect to an element of the gearing.

Alternatively or additionally, the electrical drive axle may comprise at least one of an output shaft bearing for rotatably supporting the output shaft with respect to a stationary member and a second rotor shaft bearing for rotatably supporting the rotor shaft with respect to the stationary member. The stationary member may be provided as the stationary member described above or as a separate stationary member. The bearing, the output shaft bearing and/or the second rotor shaft bearing may be configured to be the same or different from each other. In the present embodiment, the stationary member is configured to supply cooling fluid for lubricating the output shaft bearing and/or the second rotor shaft bearing. In one example, the stationary member may provide a fluid communication path for supplying the output shaft bearing and/or the second rotor shaft bearing with cooling fluid. The fluid communication path may be formed by one or more channels provided in the stationary member. The one or more channels may comprise axial and/or radial portions. The fluid communication path may include a ring channel for distributing cooling fluid to the respective bearings in a circumferential direction.

In an embodiment, the gearing comprises a first planetary gear set and a second planetary gear set. The first planetary gear set may comprise at least a first element, a second element and a third element. The second planetary gear set may comprise at least a first element, a second element and a third element. The input shaft may be non-rotatably connected to the first element of the first planetary gear set. The second element of the first planetary gear set may be non-rotatably connected to the output shaft. The third element of the first planetary gear set may be non-rotatably connected to the first element of the second planetary gear set. The second element of the second planetary gear set may be non-rotatably connected to a stationary member. The third element of the second planetary gear set may be non-rotatably connected to a further output shaft.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. In one example, each first element of the planetary gear sets may be a sun gear, each second element of the planetary gear sets may be a planetary carrier and each third element of the planetary gear sets may be a ring gear. The ring gear of the first planetary gear set may be formed integrally with the sun gear of the second planetary gear set. Thereby, a gearing with compact dimensions can be provided. The respective planetary gear set may be a plus or a minus planetary gear set. Each of the planetary gear sets may have planetary gears that may be rotatably mounted on the respective planetary carrier of the respective planetary gear set. The planetary gears may mesh with both the sun gear and the ring gear of the respective planetary gear set. With the configuration of the gearing according to the present embodiment, a power distribution function for distributing power between the output shaft and the further output shaft is provided with a simple and compact configuration. In an alternative embodiment, the further output shaft is omitted and the third element of the second planetary gear set is non-rotatably connected to the second element of the first planetary gear set instead of the further output shaft. Thereby, a gearing with a particularly high transmission ratio is provided.

In an embodiment, at least one of the second elements of the planetary gear sets is formed as a planetary carrier comprising a planetary pin configured to receive cooling fluid from a housing portion of the electrical motor and to enable a flow of at least a part of the cooling fluid received by the planetary pin to a planetary bearing mounted on the planetary pin. The planetary bearing may be provided as a needle bearing. The planetary bearing may be mounted on the planetary pin and may be configured for rotatably supporting a planetary gear on the planetary pin. The planetary pin may be configured to provide a flow path for guiding cooling fluid to the planetary bearing. For example, the planetary pin may comprise a distribution channel for receiving the cooling fluid, for example from a supply channel. The distribution channel may be configured to receive the cooling fluid in the same manner as described above with respect to the receiving channel in the output shaft. In one example, the distribution channel may be configured to receive cooling fluid provided by a supply channel formed in the housing and ejected by a planetary ejecting device formed as a nozzle. Multiple planetary ejecting devices may be provided along a ring channel provided at or near the same radial height as the planetary pins. Such a structure may ensure that the planetary pins receive a sufficient amount of cooling fluid for lubricating the planetary bearing.

In a second aspect, the present disclosure relates to a vehicle. The vehicle comprises an electrical drive axle according to the first aspect. The respective advantages and further features can be taken from the description of the first aspect, wherein embodiments of the first aspect also form embodiments of the second aspect and vice versa.

### Brief description of drawings

Figure 1 shows a vehicle with an electrical drive axle according to an embodiment of the present disclosure.
Figure 2 schematically shows a general layout of the electrical drive axle of the vehicle of Figure 1.
Figure 3 schematically shows the electrical drive axle shown in Figure 2 according to an embodiment.

### Detailed description of embodiments

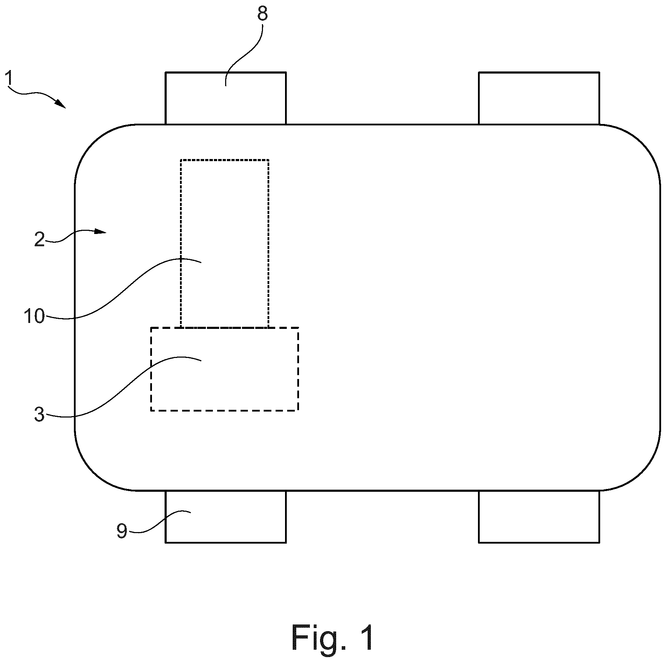

Figure 1 shows a vehicle 1 with an electrical drive axle 2 according to an embodiment of the present disclosure. The electrical drive axle 2 comprises a gearing 3 and an electrical motor 10. In the present embodiment, the gearing 3 is configured for transferring power input by the electrical motor 10 to at least two drive elements 8, 9.

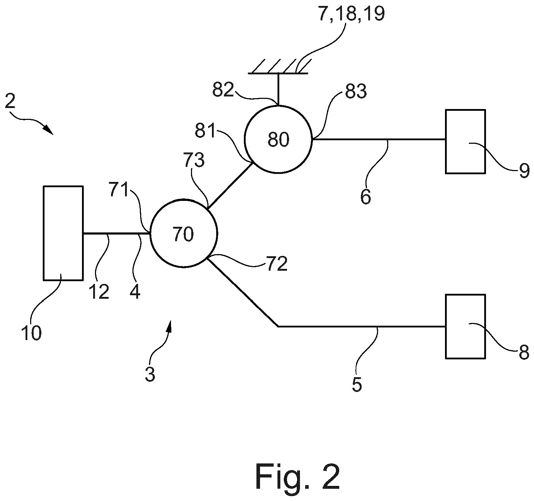

Figure 2 schematically shows a general layout of the electrical drive axle 2 according to an embodiment of the present disclosure. In the present embodiment, the gearing 3 of the electrical drive axle 2 is a distribution gearing with two planetary gear sets. As can be seen from Figure 2, the gearing 3 comprises a first planetary gear set 70 having a first element 71, a second element 72 and a third element 73. Furthermore, the gearing 3 comprises a second planetary gear set 80 having a first element 81, a second element 82 and a third element 83. A torque of the electrical motor 10 can be introduced into the gearing 3 via the first element 71 of the first planetary gear set 70. For this purpose, a rotor shaft 12 driven by the electrical motor 10 is permanently non-rotatably connected to an input shaft 4, here by being integrally formed. The input shaft 4 is mechanically operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 7, 18, 19. An output shaft 5 is mechanically operatively connected to the second element 72 of the first planetary gear set 70, in this case permanently non-rotatably connected, for outputting power to a first drive element 8. A further output shaft 6 is mechanically operatively connected to the third element 83 of the second planetary gear set 80, in this case permanently non-rotatably connected, for outputting power to a second drive element 9.

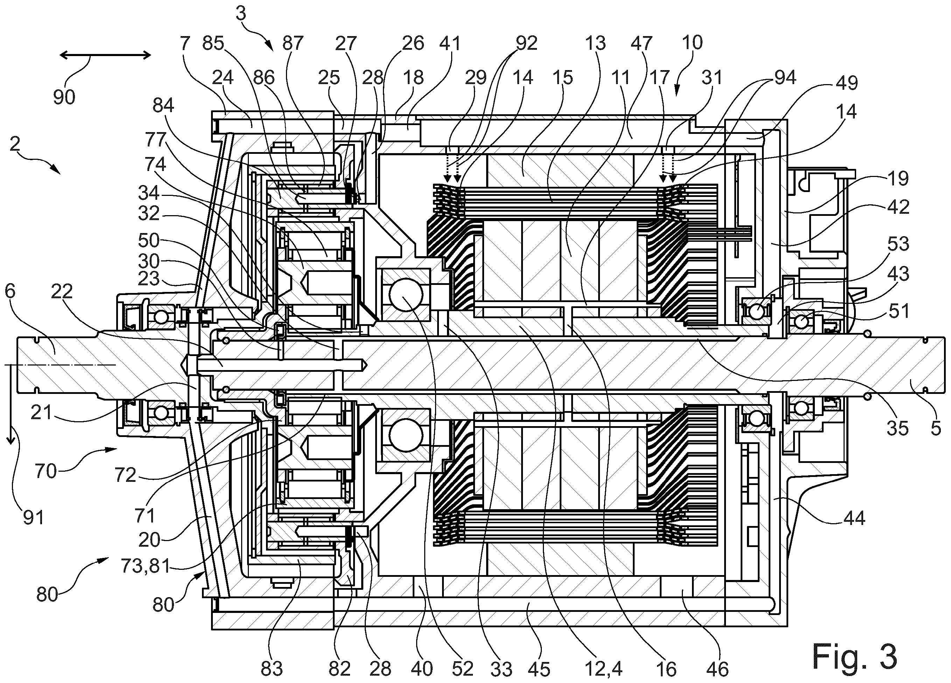

Figure 3 schematically shows the electrical drive axle 2 shown in Figure 2 according to an embodiment. The electrical drive axle 2 comprises the gearing 3 and the electrical motor 10. The gearing 3 comprises the first planetary gear set 70 and the second planetary gear set 80. Each first element 71, 81 of the planetary gear sets 70, 80 is formed as a sun gear. Each second element 72, 82 of the planetary gear sets 70, 80 is formed as a planetary carrier. Each planetary carrier 72, 82 comprises a plurality of planetary pins 74, 84. On each planetary pin 74, 84, a planetary bearing 77, 87 presently formed as needle bearing, is provided for rotatably supporting a respective planetary gear. Each third element 73, 83 of the planetary gear sets 70, 80 is formed as a ring gear. In the present embodiment, the ring gear 73 of the first planetary gear set 70 is formed integrally with the sun gear 81 of the second planetary gear set 80.

The stationary member 7, 18, 19 is presently provided with three housing portions. A first housing portion 7 is configured to rotatably support the further output shaft 6 and to accommodate most of the gearing 3. A second housing portion 18 is configured to rotatably support the rotor shaft 12 and to accommodate the electrical motor 10. Furthermore, the planetary carrier 82 of the second planetary gear set 80 is permanently non-rotatably supported on the second housing portion 18. In the present embodiment, the rotor shaft 12 is rotatably supported in the second housing portion 18 by a first rotor shaft bearing 52. A third housing portion 19 is presently configured to support the rotor shaft 12 by means of a second rotor shaft bearing 53. Furthermore, the third housing portion 19 is configured to rotatably support the output shaft 5 by means of an output shaft bearing 51. In addition, the output shaft 5 is rotatably supported with respect to the planetary carrier 72 of the first planetary gear set 70 by means of a bearing 50. In the present disclosure, the terms "first", "second", "third" etc. are used merely for ease of reference and their order is arbitrary, unless otherwise specified. Regardless of the designation, all or only some of such referenced features may be provided. For example, a second housing portion can be provided without first and third housing portions. The same applies to the bearings described in the foregoing and to fluid channels described in the following.

The electrical motor 10 comprises a rotor 11 and a stator 13. The rotor 11 is permanently non-rotatably connected to the rotor shaft 12. The rotor 11 is configured to generate torque from a magnetic field provided by the stator 13 and to apply the generated torque to the rotor shaft 12. The rotor shaft 12 is presently integrally formed with the input shaft 4 of the gearing 3. The stator 13 comprises a plurality of windings 14 for generating the magnetic field. The stator 13 is permanently non-rotatably supported in the second housing portion 18. In the present embodiment, the stator 13 is supported in the second housing portion 18 by means of an insulating member 15 for electrically insulating the stator 13.

A first supply channel 20 is provided in the stationary member, presently in the first housing portion 7. The first supply channel 20 is in fluid communication with a cooling fluid supply (not shown). The cooling fluid supply provides the first supply channel 20 with a supply of a cooling fluid, presently an oil, at a predetermined pressure. The first supply channel 20 serves as a common supply channel in the present embodiment. The first supply channel 20 connects to a second supply channel 21 formed in the further output shaft 6. In the present embodiment, the second supply channel 21 extends through the whole diameter of the further output shaft 6. A third supply channel 22 is provided in fluid communication with the second supply channel 21. The third supply channel 22 extends in an axial direction 90 through the output shaft 5. The third supply channel 22 is configured for receiving cooling fluid from the second supply channel 21. Thus, the third supply channel 22 serves as a receiving channel in the present embodiment.

A fourth supply channel 23 is presently provided in the stationary member, namely in the first housing portion 7. In the present embodiment, the fourth supply channel 23 extends along an outer surface of the first housing portion 7. The fourth supply channel 23 is in fluid communication with the second supply channel 21 and a fifth supply channel 24 extending in the axial direction 90 through the first housing portion 7. One end of the fifth supply channel 24 is closed by a cap. The other end of the fifth supply channel 24 is connected to a sixth supply channel 25 formed in the second housing portion 18. The sixth supply channel 25 is connected to a seventh supply channel 26 presently extending in a radial direction 91 inwardly to a ring channel 28. The ring channel 28 extends annularly around the output shaft 5. A plurality of planetary ejecting devices 27 are provided along a circumference of the ring channel 28 for ejecting cooling fluid into distribution channels 85, 86 formed in the planetary pins 84 on the second planetary gear set 80. Thereby, the needle bearings 87 of the second planetary gear set 80 are lubricated.

In the present embodiment of Figure 3, the sixth supply channel 25 is also connected to an eighth supply channel 41 extending in the axial direction 90 through the second housing portion 18. The eighth supply channel 41 is connected to a supply tank 47 formed in the second housing portion 18. The supply tank 47 presently comprises an annular shape extending in the axial direction 90 and along an angle range around the stator 13. The supply tank 47 has a larger thickness than a diameter of the eighth supply channel 41. The supply tank 47 comprises an air exchange opening (not shown) for exchanging air with an inside and outside of the second housing portion 18 such that air is present in the supply tank 47 at an ambient pressure level. Cooling fluid fed into the supply tank 47 is collected inside the supply tank 47 and forms an open surface such that the cooling fluid in the supply tank 47 also assumes the ambient pressure level. The supply tank 47 is connected to a ninth supply channel 49 extending through the second housing portion 18 and partly through the third housing portion 19. The ninth supply channel 49 is connected to a tenth supply channel 42 extending in the radial direction 91 through the third housing portion 19 to a further ring channel 43. The further ring channel 43 is arranged between the output shaft bearing 51 and the second rotor shaft bearing 53 in the axial direction 90 and is configured to supply these bearings 51, 53 with cooling fluid for lubrication. Cooling fluid used for lubricating the second rotor shaft bearing 53 and the output shaft bearing 51 is drained to a sump 45 by a first drain channel 44 formed in the third housing portion 19. The sump 45 is provided at a lower end of the second housing portion 18. The sump 45 is in fluid communication with the cooling fluid supply. Furthermore, an unshown heat exchanger is arranged in the sump 45 for exchanging heat between cooling fluid in the sump 45 and a coolant so as to cool the cooling fluid.

An ejecting device 29 for cooling the stator 13 is provided at an inner circumferential surface of the second housing portion 18 for ejecting cooling fluid onto the stator 13 on one axial side, namely the left side in Figure 3. In the present embodiment, the ejecting device 29 is in fluid communication with the supply tank 47 and is formed as a nozzle for dripping the cooling fluid as drops 92, presently onto the windings 14 of the stator 13 on the one axial side. In an unshown further embodiment, a plurality of ejecting devices 29 for cooling the stator 13 are provided along the inner circumferential surface of the second housing portion 18 for ejecting cooling fluid onto the stator 13 on the one axial side in an angle range around the stator 13. Cooling fluid dripped onto the stator 13, namely the windings 14, for cooling the stator 13 is drained via a second drain channel 40 and a third drain channel 46 to the sump 45. The sump 45 is provided at a lower end of the second housing portion 18.

A further ejecting device 31 for cooling the stator 13 is provided at the inner circumferential surface of the second housing portion 18 for ejecting cooling fluid onto the stator 13 on the other axial side, namely the right side in Figure 3. In the present embodiment, the further ejecting device 31_is in fluid communication with the supply tank 47 and is formed as a nozzle for dripping the cooling fluid as further drops 94, presently onto the windings 14 of the stator 13 on the other axial side. In an unshown further embodiment, a plurality of further ejecting devices 31 for cooling the stator 13 are provided along the inner circumferential surface of the second housing portion 18 for ejecting cooling fluid onto the stator 13 on the other axial side in an angle range around the stator 13.

A first lubrication channel 30 is formed in the output shaft 5 for lubricating the bearing 50. In the present embodiment, the first lubrication channel 30 extends radially from the receiving channel 22 to an outer circumferential surface of the output shaft 5 at the axial height of the bearing 50. Cooling fluid used for lubricating the bearing 50 is drained via the second drain channel 40 to return to the sump 45. A second lubrication channel 32 is formed in both radial directions of the output shaft 5 so as to extend to an outer circumferential surface thereof. The second lubrication channel 32 opens into an annular cavity 35 formed radially between the output shaft 5 and the rotor shaft 12. The annular cavity 35 is configured to provide a heat exchange path along a radially inner circumferential surface of the rotor shaft 12 for cooling the rotor 11. In addition, the annular cavity 35 is connected to a first rotor cooling channel 16 extending radially through the rotor shaft 12 and a part of the rotor 11. The first rotor cooling channel 16 is in fluid communication with a second rotor cooling channel 17 extending axially through the rotor 11 for cooling the rotor 11. In the present embodiment, multiple first and second rotor cooling channels 16, 17 are provided along a circumference of the rotor shaft 12 and the rotor 11.

Further to providing cooling for the rotor 11, the annular cavity 35 is also configured to provide lubrication. In the present embodiment, a third lubrication channel 33 is formed in the rotor shaft 12 in the vicinity of the first rotor shaft bearing 52 so as to provide a fluid communication path between the annular cavity 35 and the first rotor shaft bearing 52 for lubrication. In addition, in the present embodiment, a fourth lubrication channel 34 is formed in the rotor shaft 12 in the vicinity of the gearing 3 so as to provide a fluid communication path between the annular cavity 35 and the elements 71, 72, 73 of the first planetary gear set 70, for example for lubricating the gears and the planetary bearing 77 of the first planetary gear set 70.

With the above-described structure, the electrical drive axle 2 of the present embodiment achieves a high cooling capacity for the stator 13. In addition, optional cooling with a high capacity is provided for the rotor 11. Furthermore, an optional lubricating function is provided for all bearings of the rotor shaft 12 and the output shaft 5. Further still, an optional lubricating function is provided for all rotating elements of the gearing 3. Accordingly, the present embodiment combines a high cooling and lubricating capacity, enabling a high power density, with a compact structure of the electrical drive axle.

### Reference signs

- 1: vehicle
- 2: electrical drive axle
- 3: gearing
- 4: input shaft
- 5, 6: output shaft
- 7, 18, 19: stationary member
- 8, 9: drive element
- 10: electrical motor
- 11: rotor
- 12: rotor shaft
- 13: stator
- 14: windings
- 15: insulating member
- 16, 17: rotor cooling channel
- 20, 21, 22, 23, 24, 25, 26, 41, 42, 49: supply channel
- 27, 29, 31: ejecting device
- 28, 43: ring channel
- 30, 32, 33, 34: lubrication channel
- 35: annular cavity
- 40, 44, 46: drain channel
- 45: sump
- 47: supply tank
- 50, 51, 52, 53: bearing
- 70, 80: planetary gear set
- 71, 81: first element
- 72, 82: second element
- 73, 83: third element
- 74, 84: planetary pin
- 77, 87: planetary bearing
- 85, 86: distribution channel
- 90: axial direction
- 91: radial direction
- 92, 94: drops

## Claims

1. An electrical drive axle (2) for a vehicle (1), comprising an electrical motor (10) with a stator (13) having a radial direction (91), a cooling fluid supply and an ejecting device (29; 31) configured to eject cooling fluid in the radial direction (91) onto the stator (13) for cooling the stator (13).

2. The electrical drive axle (2) according to claim 1, **characterized in that** the ejecting device (29; 31) is configured as a dripping device for dripping the cooling fluid onto the stator (13).

3. The electrical drive axle (2) according to claim 1 or 2, **characterized in that** the stator (13) comprises windings (14) and the ejecting device (29; 31) is configured to eject cooling fluid onto the windings (14).

4. The electrical drive axle (2) according to any one of claims 1 to 3, **characterized in that** the ejecting device (29; 31) is provided on one axial side of the stator (13) and a further ejecting device (31; 29) is provided on the other axial side of the stator (13) for ejecting cooling fluid onto the stator (13) on both axial sides.

5. The electrical drive axle (2) according to any one of the preceding claims, **characterized by** comprising a supply tank (47) formed in a housing portion (18) accommodating the stator (13) for supplying the ejecting device (29; 31) with cooling fluid from the cooling fluid supply.

6. The electrical drive axle (2) according to claims 4 and 5, **characterized in that** the electrical drive axle (2) is configured to supply both the ejecting device (29; 31) and the further ejecting device (31; 29) with cooling fluid from the supply tank (47).

7. The electrical drive axle (2) according to claim 5 or 6, **characterized by** comprising a plurality of ejecting devices (29; 31) arranged in a circumferential direction around an axial direction (90) of the electrical motor (10), wherein the supply tank (47) is formed at least partly along the circumferential direction in the housing portion (18) and is in fluid communication with the ejecting devices (29; 31) for supplying the ejecting devices (29; 31) with cooling fluid.

8. The electrical drive axle (2) according to any one of the preceding claims, **characterized by** comprising a common supply channel (20) formed in a stationary member (7; 18; 19) and being in fluid communication with the cooling fluid supply, wherein the electrical drive axle (2) is configured to enable at least a part of the cooling fluid flowing through the common supply channel (20) to flow to the ejecting device (29; 31) for ejection and to enable at least a part of the cooling fluid flowing through the common supply channel (20) to flow to an element (50; 51; 52; 53; 71; 71; 73; 81; 82; 83) of the gearing (3) for lubricating the element (50; 51; 52; 53; 71; 71; 73; 81; 82; 83) of the gearing (3).

9. The electrical drive axle (2) according to any one of the preceding claims, **characterized by** comprising a sump (45), a drain channel (40; 44; 46) for draining cooling fluid into the sump (45) and a heat exchanger arranged in the sump (45) for exchanging heat between the cooling fluid in the sump (45) and a coolant.

10. The electrical drive axle (2) according to any one of the preceding claims, **characterized in that** the electrical motor (10) comprises a rotor (11) mechanically connected to a rotor shaft (12), the electrical drive axle (2) comprises a gearing (3) comprising an input shaft (4) and an output shaft (5) being arranged coaxially to the rotor shaft (12), the input shaft (4) is operatively connected to the rotor shaft (12), and the output shaft (5) is configured to receive cooling fluid from the cooling fluid supply and to enable at least a part of the received cooling fluid to flow from the output shaft (5) to the rotor shaft (12) for cooling the rotor (11).

11. The electrical drive axle (2) according to claim 10, **characterized by** comprising a first rotor cooling channel (16) extending through the rotor shaft (12) and being in fluid communication with a second rotor cooling channel (17) extending through the rotor (11).

12. The electrical drive axle (2) according to claim 10 or 11, **characterized in that** the rotor shaft (12) is configured to enable at least a part of the received cooling fluid to flow through at least one of the output shaft (5) and the rotor shaft (12) for lubricating an element (50; 51; 52; 53; 71; 71; 73) of the gearing (3).

13. The electrical drive axle (2) according to any one of the preceding claims, **characterized in that** the gearing (3) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the output shaft (5), the third element (73) of the first planetary gear set (70) is non-rotatably connected to the first element (81) of the second planetary gear set (80), the second element (82) of the second planetary gear set (80) is non-rotatably connected to a stationary member (7; 18; 19), and the third element (83) of the second planetary gear set (80) is non-rotatably connected to a further output shaft (6).

14. The electrical drive axle (2) according to claim 13, **characterized in that** at least one of the second elements (72, 82) of the planetary gear sets (70, 80) is formed as planetary carrier comprising a planetary pin (84) configured to receive cooling fluid from a housing portion (18) of the electrical motor (10) and to enable a flow of at least a part of the cooling fluid received by the planetary pin (84) to a planetary bearing (87) mounted on the planetary pin (84).

15. A vehicle comprising an electrical drive axle (2) according to any one of the preceding claims.
